# EUROPEAN PATENT APPLICATION

(11) **EP 2 196 994 A1**
(43) Date of publication of application: **16.06.2010**
(21) Application number: 09171556.5
(22) Date of filing: 29.09.2009
(51) Int. Cl.: G11B 20/00

(54) **Electronic device and method to control output thereof**

(30) Priority: 11.12.2008 KR 20080125977
(71) Applicant: Samsung Electronics Co., Ltd., Suwon-si, Gyeonggi-do 442-742 (KR)
(72) Inventor: Cho, Kee-yeong, Seoul (KR); Kim, Hag-do, Suwon-si, Gyeonggi-do (KR)
(74) Representative: D'Halleweyn, Nele Veerle Trees Gertrudis

(57) **Abstract**

An electronic device and a method to control an output thereof are provided. The electronic device includes a controller to control whether to output non-encrypted multimedia data to an external device based on whether the external device is communicatively connected to the electronic device, and an interface to output the non-encrypted multimedia data to the external device under the control of the controller.

## Description

The present general inventive concept relates to an electronic device and a method to control an output thereof, and more particularly, to an electronic device which outputs non-encrypted data to an external device communicatively connected to the electronic device and a method to control an output thereof.

In general, if an electronic device has information to display, it loads content to display, generates an image for the loaded content, adds a background image to the generated image, and displays the image. The electronic device refers to a device which processes a video signal to be displayed on an internal or external display apparatus which includes, for example, a home theater, a digital TV, a mobile phone, a personal computer, and a laptop computer.

In order to transmit high definition (HD) video data to an external device, a conventional electronic device converts the HD video data into standard definition (SD) video data and transmits the SD video data to the external device. Therefore, deterioration occurs in image quality and sound quality of the video data reproduced by the external device and a delay indicating asynchronization between a displayed image and an output audio occurs.

In order to prevent these problems, a conventional electronic device transmits compressed and encrypted HD video data to an external device such that the external device decompresses and decrypts the compressed and encrypted HD video data and displays the video data.

However, since a conventional electronic device employs a HD encryption module, the cost of the electronic device increases. Additionally, since an external device should employ a decompression and decryption module, the size and cost of the external device increases as well. Therefore, even a user who does not use the function of transmitting HD video data to an external device cannot avoid unnecessary expenditure.

### SUMMARY

The present general inventive concept provides an electronic device which outputs non-encrypted data to an external device connected to the electronic device, and a method of controlling an output thereof.

Additional features and utilities of the present general inventive concept will be set forth in part in the description which follows and, in part, will be obvious from the description, or may be learned by practice of the general inventive concept.

Embodiments of the present general inventive concept can be achieved by providing an electronic device including an interface connected to an external device which encrypts non-encrypted multimedia data, and a controller to control whether to output the non-encrypted multimedia data to the external device through the interface based on whether the external device is connected to the electronic device.

The controller may output the non-encrypted multimedia data to the external device if the external device is connected to the electronic device.

The controller may control the interface to not output the non-encrypted multimedia data to the external device if the external device is not connected to the electronic device.

The external device may be a mobile device which is connectable to the electronic device and may be of a dongle type.

The controller may determine whether the external device is connected to the electronic device based on a voltage level received through the interface.

The controller may authenticate the external device through the interface if the external device is connected to the electronic device and the controller may output the non-encrypted multimedia data to the external device if the external device is authenticated.

The external device may encrypt the non-encrypted multimedia data received from the interface and may transmit the encrypted multimedia data to a receiving device.

The non-encrypted multimedia data may include at least one of a decompressed HD audio data and a decompressed HD video data.

Embodiments of the present general inventive concept can also be achieved by providing an output control method including determining whether an external device which encrypts non-encrypted multimedia data is connected to an electronic device, and controlling whether to output the non-encrypted multimedia data to the external device based on whether the external device is connected to the electronic device.

The controlling may control the non-encrypted multimedia data to be output to the external device if the external device is connected to the electronic device.

The controlling may control the non-encrypted multimedia data to not be output to the external device if the external device is not connected to the electronic device.

The external device may be a mobile device which is connectable to the electronic device and may be of a dongle type.

The determining may include receiving a voltage level, and the determining may determine whether the external device is connected to the electronic device based on the voltage level.

The controlling may authenticate the external device if the external device is connected to the electronic device, and the controlling may control the non-encrypted data to be output to the external device if the external device is authenticated.

The external device may encrypt the non-encrypted multimedia data and transmit the encrypted multimedia data to an external receiving device.

The non-encrypted multimedia data may include at least one of a decompressed HD audio data and a decompressed HD video data.

Embodiments of the present general inventive concept can also be achieved by providing a mobile device including an interface connected to an electronic device which transmits non-encrypted multimedia data, and a controller to control the non-encrypted multimedia data transmitted from the electronic device to be encrypted and control the encrypted multimedia data to be transmitted to an external device through the interface.

The mobile device may be of a dongle type which is connectable to the electronic device through the interface.

Embodiments of the present general inventive concept can also be achieved by providing a system including an external device to encrypt non-encrypted data, and an electronic device including an interface to output the non-encrypted data to the external device, and a controller to control whether to output the non-encrypted data according to whether the external device is connected to the electronic device.

The controller may control the interface to output the non-encrypted data when a voltage level received through the interface is above a predetermined threshold.

The controller may control the interface to output the non-encrypted data when a strength of a wireless frequency received through the interface is above a predetermined threshold.

The system may further include a receiving device, wherein the external device encrypts the non-encrypted data and transmits the encrypted data to the receiving device.

Embodiments of the present general inventive concept can also be achieved by providing a method of controlling an external device, including receiving non-encrypted data from an electronic device, encrypting the non-encrypted data, and transmitting the encrypted data to a receiving device.

The external device may receive the non-encrypted data when a voltage level received through an interface of the electronic device from the external device is above a predetermined threshold.

The external device may receive the non-encrypted data when a strength of a wireless frequency received through an interface of the electronic device from the external device is above a predetermined threshold.

### BRIEF DESCRIPTION OF THE DRAWINGS

These and/or other features and utilities of the present general inventive concept will become apparent and more readily appreciated from the following description of the exemplary embodiments, taken in conjunction with the accompanying drawings, of which:
FIG. 1 is a block diagram illustrating an electronic device according to exemplary embodiments of the present general inventive concept;
FIG. 2 is a flowchart illustrating a method of operating an electronic device according to exemplary embodiments of the present general inventive concept; and
FIG. 3 is a diagram to illustrate multimedia data transmission among an electronic device, an external device, and a receiving device according to exemplary embodiments of the present general inventive concept.

### DETAILED DESCRIPTION OF THE EMBODIMENTS

Reference will now be made in detail to the exemplary embodiments of the present general inventive concept, examples of which are illustrated in the accompanying drawings, wherein like reference numerals refer to like elements throughout. The exemplary embodiments are described below in order to explain the present general inventive concept by referring to the figures.

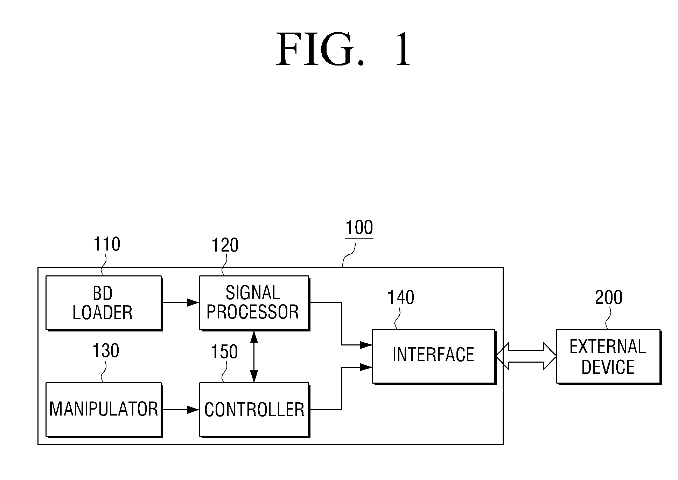

FIG. 1 is a block diagram illustrating an electronic device according to an exemplary embodiment of the present general inventive concept.

Hereinafter, an electronic device 100 may be referred to as a home theater 100 for the convenience of explanation. The home theater 100 may include a body to signal-process HD video data, a display to display a signal-processed image, and a speaker to output a signal-processed sound. For the sake of simplicity, detailed operation of the display and the speaker is omitted.

Referring to FIG. 1, a home theater 100 may include a Blue-ray disk (BD) loader 110, a signal processor 120, a manipulator 130, an interface 140, and a controller 150.

The BD loader 110 reads multimedia video data which may be compressed and encrypted in MPEG, H.264, VC-1 codec methods, and the like, from a BD player or a recording medium. The recording medium may be a hard disk (HDD) and the multimedia video data may be HD level video data (resolution of 1024*768), HD video data (resolution of 1366*768), Full HD video data (resolution of 1920*1080), and the like.

The BD loader 110 transmits the read video data to the signal processor 120.

The signal processor 120 separates video and audio signals from the compressed and encrypted video data which is read by the BD loader 110, and performs signal-processing, such as video decoding, video scaling, video decryption, audio decoding, and audio decryption, with respect to the separated video and audio signals.

The signal processor 120 transmits the decompressed and decrypted video data to the interface 140. The video data may include at least one of an HD digital audio signal and an HD video signal.

The manipulator 130 provides a user interface for the manipulation of the home theater 100. The manipulator may receive commands from a user, and then may transmit the user commands to the controller 150. The manipulator 130 may output a user command corresponding to multimedia video data selected among multimedia video data recorded on the recording medium to the controller 150. The manipulator 130 may be implemented as a touch screen, a touch panel, a manipulation button, and the like.

The interface 140 provides connection between the home theater 100 and an external device 200, and outputs the video data which is decompressed and decrypted by the signal processor 120 to the external device 200. The connection between the home theater 100 and the external device 200 may be wired or wireless.

The controller 150 determines whether the external device 200 is or is not communicatively connected to the home theater 100 based on a voltage level received from the interface 140. Additionally, the controller 150 may control the interface 140 to output the decompressed and decrypted video data.

The controller 150 may determine that the external device 200 is communicatively connected to the home theater 100 if the voltage level received from the interface 140 is high, and determines that the external device 200 is not communicatively connected to the home theater 100 if the voltage level is low. For example, a voltage level above a predetermined threshold may be considered a high voltage, and a voltage level below the predetermined threshold may be considered a low voltage. The predetermined threshold may be determined according to the voltage output of the external device 200 when the external device 200 is in a powered on state and a powered off state.

The controller 150 may determine that the external device 200 is communicatively connected to the home theater 100 if a strength of a wireless frequency, such as a radio frequency, is above a predetermined threshold. The predetermined threshold may be determined according to the strength of the wireless frequency required for a connection to be established between the home theater 100 and the external device 200.

The controller 150 authenticates the external device 200 through the interface 140 if the external device 200 is determined to be communicatively connected to the home theater 100. The controller 150 transmits a confirmation request message to the external device 200 via a wired or wireless signal to confirm whether the external device 200 is communicatively connected to the home theater 100 or not, and receives an acknowledgement (ACK) message from the external device 200 through the interface 140 in response to the confirmation request message.

The controller 150 authenticates the external device 200 upon receiving the ACK message from the external device 200. The authentication method performed among the devices is a well known method and thus detailed description thereof is omitted.

When the external device 200 is authenticated, the controller 150 controls the interface 140 to transmit the multimedia video data, which is decompressed and decrypted by the signal processor 120, to the external device 200. The external device 200 encrypts the decompressed and decrypted multimedia data received from the interface 140 according to digital rights management (DRM) information, and transmits the encrypted multimedia data to a receiving device 300. The receiving device 300 may include any device that can display the multimedia video data. For example, the receiving device 300 may include, but is not limited to, a television, a portable electronic device, a computer display, and the like. The transmission of encrypted multimedia data to the receiving device 300 may be wired or wireless.

If the external device 200 is not communicatively connected to the home theater 100 or if the external device 200 is not authenticated by the controller 150, the controller 150 controls the interface 140 to not output the multimedia video data, which is decompressed and decrypted by the signal processor 120, to the external device 200.

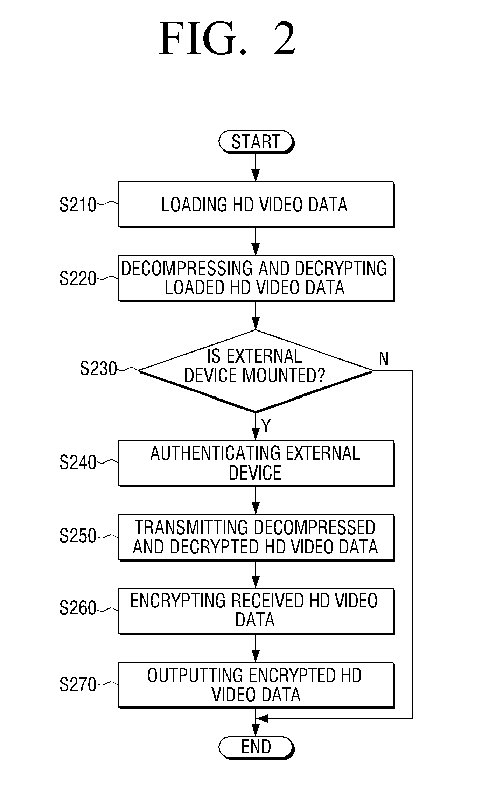

FIG. 2 is a flowchart illustrating a method of operating the electronic device according to an exemplary embodiment of the present general inventive concept.

The BD loader 110 loads multimedia video data selected by the user in operation S210.

The signal processor 120 decompresses and decrypts the loaded multimedia video data in operation S220.

The controller 150 determines whether the external device 200 is communicatively connected to the home theater 100 in operation S230. The external device 200 may be a dongle type mobile device which is communicatively connectable to the home theater 100. The external device 200 may be mounted to the home theater 100.

For example, the controller 150 may determine that the external device 200 is communicatively connected to the home theater 100 if the voltage level received from the interface 140 is high, and determines that the external device 200 is not communicatively connected to the home theater 100 if the voltage level is low. In exemplary embodiments when the external device 200 is wirelessly connectable to the home theater 100, the controller 150 may determine whether the external device is communicatively connected to the home theater 100 if a strength of a communication signal at a predetermined wireless frequency or a range of frequencies is above a predetermined threshold.

If the external device 200 is determined to be communicatively connected to the home theater 100 in operation S230-Y, the controller 150 authenticates the external device 200 in operation S240. If the external device 200 is determined to not be communicatively connected to the home theater 100 in operation S230-N, the controller 150 controls the interface 140 to not output the decompressed and decrypted multimedia video data to the external device 200.

For example, the controller 200 may transmit a confirmation request message to the external device 200 to confirm whether the external device 200 is communicatively connected to the home theater 100, and receives an ACK message in response to the confirmation request message from the external device 200 through the interface 140. If the controller 200 receives the ACK message from the external device 200, the controller 200 authenticates the external device 200 using a well-known method.

If the external device 200 is authenticated, the controller 150 controls the interface 140 to output the decompressed and decrypted multimedia video data to the external device 200 in operation S250. If the external device 200 is not authenticated, the controller 150 controls the interface 140 to not output the multimedia video data, which is decompressed and decrypted in operation S220, to the external device 200.

The external device 200 encrypts the decompressed and decrypted multimedia data according to the DRM in operation S260. The external device 200 outputs the encrypted multimedia data in operation S270.

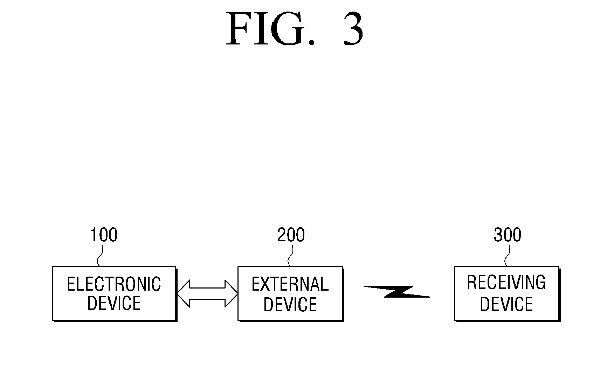

FIG. 3 is a diagram to illustrate multimedia data transmission among an electronic device, an external device, and a receiving device according to an exemplary embodiment of the present general inventive concept.

Referring to FIG. 3, an interface (not illustrated) of the external device 200 receives the decompressed and decrypted multimedia video data from the electronic device 100, and a controller (not illustrated) of the external device 200 encrypts the received multimedia video data according to the DRM. In other words, the controller (not illustrated) of the external device 200 re-encrypts the decompressed and decrypted multimedia video data from the electronic device 100 based on the DRM.

The external device 200 converts the re-encrypted multimedia video data into transmissible data and transmits it to the receiving device 300. The transmission of encrypted multimedia data to the receiving device 300 may be wired or wireless. Herein, the re-encrypted multimedia video data is in a non-compressed format. Therefore, the external device 200 and the receiving device 300 do not necessarily have a compression and decompression module.

The receiving device 300 decrypts the re-encrypted multimedia video data received from the external device 200 and outputs the decrypted video data to a display (not illustrated) or a speaker (not illustrated). The receiving device 300 may be provided inside the display (not illustrated) or the speaker (not illustrated) or may be provided outside the display (not illustrated) or the speaker (not illustrated).

Although the electronic device 100 decompresses and decrypts the video data loaded through the BD loader 110, the electronic device 100 may decompress and decrypt video data from other sources. For example, the electronic device 100 may decompress and decrypt the video data downloaded from a server or a broadcasting station and may output the video data to the external device 200 through the interface 140.

Also, the BD loader 110 may be provided inside the home theater 100, the BD loader 110 may be provided outside the home theater 100 and communicatively connected to the home theater 100 through a wired or wireless connection.

If the voltage level received from the interface 140 is high, i.e., above the predetermined threshold, the external device 200 is determined to be communicatively connected to the electronic device 100, and if the voltage level is low, i.e., below the predetermined threshold, the external device 200 is not determined to be communicatively connected to the electronic device 100. In exemplary embodiments of the present general inventive concept, the controller 150 may determine that the external device 200 is communicatively connected to the electronic device 100 if the voltage level is low, and the controller 150 may determine that the external device 200 is not communicatively connected to the electronic device 100 if the voltage level is high. As described above, the voltage level may be determined to be high or low based on a comparison with a predetermined threshold. In exemplary embodiments of the present general inventive concept, the controller 150 may determine that the external device 200 is communicatively connected to the electronic device 100 if a strength of a communication signal at a predetermined wireless frequency or a range of frequencies is above a predetermined threshold.

As described above, according to whether the external device 200 to encrypt the non-encrypted high-resolution video data is communicatively connected to the electronic device 100, the electronic device 100 controls whether to output the non-encrypted high resolution video data. Accordingly, it is possible to reduce the cost of the electronic device 200 for both a user who wishes to transmit the HD video data to the outside and a user who does not wish to do so.

Although several exemplary embodiments of the present general inventive concept have been illustrated and described, it will be appreciated by those skilled in the art that changes may be made in these exemplary embodiments without departing from the principles and spirit of the general inventive concept, the scope of which is defined in the appended claims and their equivalents.

## Claims

1. An electronic device (100) comprising:
an interface (140) adapted to be connected to an external device (200) which encrypts non-encrypted multimedia data; and
a controller (150) adapted to control whether to output the non-encrypted multimedia data to the external device through the interface based on whether the external device is connected to the electronic device.

2. The electronic device of claim 1, wherein the controller (150) is adapted to control the interface to output the non-encrypted multimedia data to the external device if the external device is connected to the electronic device,
and to control the interface to not output the non-encrypted multimedia data to the external device if the external device is not connected to the electronic device.

3. The electronic device of claims 1 or 2, wherein the external device is a mobile device which is connectable to the electronic device and is of a dongle type.

4. The electronic device of claim 3, wherein the mobile device is adapted to encrypt the non-encrypted multimedia data transmitted from the electronic device and to transmit the encrypted multimedia data to another external device

5. The electronic device of any one of claims 1-4, wherein the controller (150) is adapted to determine whether the external device is connected to the electronic device based on a voltage level received through the interface.

6. The electronic device of claim 5, wherein the controller (150) is adapted to authenticate the external device through the interface if the external device is connected to the electronic device and to output the non-encrypted multimedia data to the external device when the external device is authenticated.

7. The electronic device of any one of claims 1-6, wherein the external device is adapted to encrypt the non-encrypted multimedia data received from the interface and to transmit the encrypted multimedia data to a receiving device.

8. The electronic device of any one of claims 1-7, wherein the non-encrypted multimedia data includes at least one of a decompressed HD audio data and a decompressed HD video data.

9. An output control method comprising:
determining whether an external device which encrypts non-encrypted multimedia data is connected to an electronic device (S230); and
controlling whether to output the non-encrypted multimedia data to the external device based on whether the external device is connected to the electronic device.

10. The output control method of claim 9, wherein the controlling controls the non-encrypted multimedia data to be output to the external device if the external device is connected to the electronic device,
wherein the controlling controls the non-encrypted multimedia data to not be output to the external device if the external device is not connected to the electronic device.

11. The output control method of claims 9 or 10, wherein the external device is a mobile device which is connectable to the electronic device and is of a dongle type.

12. The output control method of any one of claims 9-11, wherein the determining comprises: receiving a voltage level,
wherein the determining determines whether the external device is connected to the electronic device based on the voltage level.

13. The output control method of claim 12, wherein the controlling authenticates the external device if the external device is connected to the electronic device and the controlling controls the non-encrypted data to be output to the external device when the external device is authenticated.

14. The output control method of any one of claims 9-13, wherein the external device encrypts the non-encrypted multimedia data and transmits the encrypted multimedia data to a receiving device.

15. The output control method of any one of claims 9-14, wherein the non-encrypted multimedia data includes at least one of a decompressed HD audio data and a decompressed HD video data.
